# EUROPEAN PATENT APPLICATION

(11) **EP 2 139 178 A1**
(43) Date of publication of application: **30.12.2009**
(21) Application number: 08290626.4
(22) Date of filing: 27.06.2008
(51) Int. Cl.: H04L 12/56, H04L 29/08

(54) **Method of determining a routing path**

(71) Applicant: Alcatel Lucent, 75008 Paris (FR)
(72) Inventor: Schwan, Nico, Dipl.-Informatiker, 70190 Stuttgart (DE); Strauss, Thomas, Dipl.-Ing. (BA), 73734 Esslingen (DE); Tomsu, Marco, Dipl.-Ing., 71254 Ditzingen (DE)
(74) Representative: Zinsinger, Norbert

(57) **Abstract**

The invention concerns a method of determining a routing path in a peer-to-peer overlay network (N), and a network node (20) and a computer program product to execute said method. The peer-to-peer overlay network (N) comprises a plurality of nodes (0, 20, 50, 87, 112, 140, 179, 200, 211, 223, 240). A physical hardware on which a first node (20) of said plurality of nodes (0, 20, 50, 87, 112, 140, 179, 200, 211, 223, 240) runs is identified. At least one second node (112, 211) of said plurality of nodes (0, 20, 50, 87, 112, 140, 179, 200, 211, 223, 240) which runs on the same physical hardware as the first node (20) is identified. A data set specifying an identifier of said at least one second node (112, 211) is generated. Said data set is stored as a zero-path table associated with the first node (20). When determining said routing path, said data set is accessed and a link (ZL1, ZL2) between said first node (20) and said at least one second node (112, 211) based on said zero-path table is selected.

## Description

The present invention relates to a method of determining a routing path in a peer-to-peer overlay network, and a network node and a computer program product to execute said method.

Peer-to-peer (= P2P) overlay networks are used for a broad number of applications such as VoIP (e.g., Skype) or file-sharing (e.g., eMule) (VoIP = Voice over Internet Protocol). Features like high scalability, self-organisation and fault tolerance are achieved by a distributed architecture and data storage on collectively provided and used resources. The P2P network consists of nodes acting as peers, i.e., both as clients and as servers of the network. In the following description, the terms "node" and "peer" are used interchangeably. Each node of the network maintains one or more logical links to other nodes that are established with respect to an overlay algorithm and used for message transmission.

State-of-the-art P2P networks build a logical topology structure based on overlay specific algorithms that are agnostic of the underlying network infrastructure. Each node maintains one or more links to other nodes that are used for message routing in a broadcast manner (unstructured overlays, e.g. Gnutella) or in an ID-based manner (structured overlays using a Distributed Hash Table (= DHT), e.g. Chord) (ID = identification/identifier). Some systems use hybrid architectures with unstructured groups of peers, and these groups are the structured in a larger topology (e.g. Skype). The routing algorithms are optimised to minimise the hop count of intermediate forwarding peers in the logical overlay.

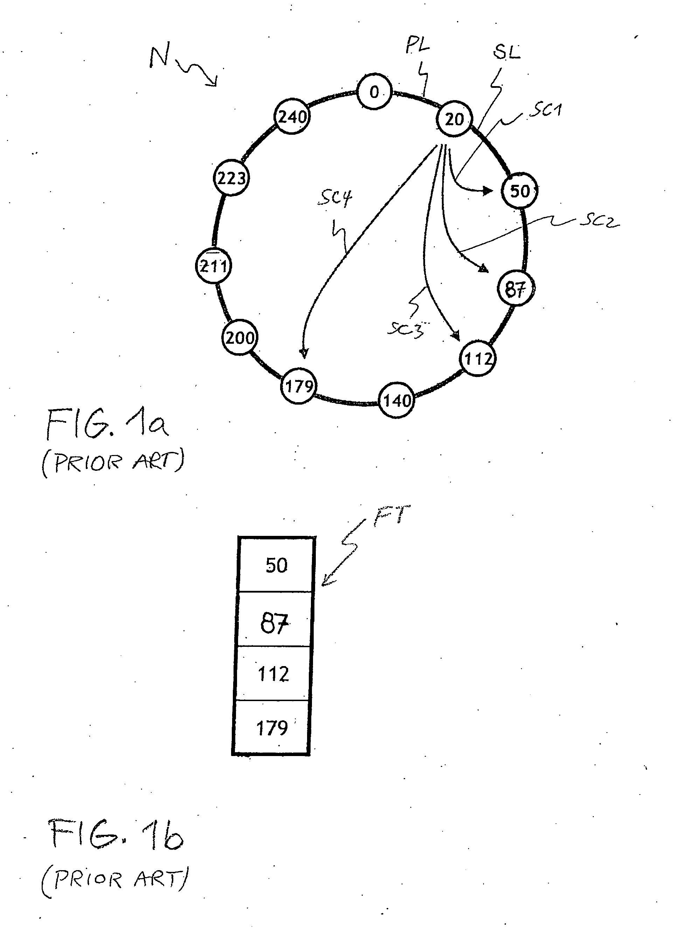

Fig. 1 a shows a prior art structured P2P overlay network N comprising a plurality of nodes 0, 20, 50, 87, 112, 140, 179, 200, 211, 223, 240. In particular, Fig. 1 a illustrates a Chord ring N. Routing in the Chord ring N is based on links PL, SL, SC1, SC2, SC3, SC4 that a node 20 maintains to several neighbours 0, 50, 87, 112, 179. These links are used to forward messages hop-by-hop towards a destination peer. No direct connection between source and destination peer is needed. In Chord the nodes maintain direct connections to their predecessor and successor nodes, which results in a ring topology. For example in the Chord ring N shown in Fig. 1a, the node 20 maintains a direct connection PL to its predecessor node 0 and a direct connection SL to its successor node 50. Further the nodes maintain a finger table with additional shortcuts which are used for message routing and consist of those nodes that follow the peer at power-of-two distances in the ID space. For example in the Chord ring N shown in Fig. 1a, the node 20 maintains shortcut links SC1, SC2, SC3, SC4 to the nodes 50, 87, 112, 179. Fig. 1 b shows a finger table FT associated with the node 20 where the nodes to which the node 20 maintains the shortcut links are listed. By maintaining the finger table FT, a node in a network with a Chord architecture achieves a maximum hop count of the order of log n, i.e., O(log n), where n is the number of nodes in the network.

It is the object of the present invention to provide an improved method of determining a routing path in a peer-to-peer overlay network. Moreover, it is the object of the present invention to provide a corresponding network node and a corresponding computer program product to execute this improved method.

The object of the present invention is achieved by a method of determining a routing path in a peer-to-peer overlay network comprising a plurality of nodes, the method comprising identifying a physical hardware on which a first node of said plurality of nodes runs, determining at least one second node of said plurality of nodes which runs on the same physical hardware as the first node, generating a data set specifying an identifier of said at least one second node, storing said data set as a zero-path table associated with the first node, and when determining said routing path, accessing said data set and selecting a link between said first node and said at least one second node based on said zero-path table. Moreover, the object of the present invention is achieved by a first node of a peer-to-peer overlay network comprising a plurality of nodes, whereby the first node comprises a control unit adapted to identify a physical hardware on which the first node runs, determine at least one second node of said plurality of nodes which runs on the same physical hardware as the first node, generate a data set specifying an identifier of said at least one second node, initiate the storage of said data set as a zero-path table associated with the first node, and when determining said routing path, access said data set and select a link between said first node and said at least one second node based on said zero-path table. And the object of the present invention is achieved by a computer program product for determining a routing path in a peer-to-peer network comprising a plurality of nodes, whereby the computer program product, when executed by a node of said plurality of nodes, performs identifying a physical hardware on which a first node of said plurality of nodes runs, determining at least one second node of said plurality of nodes which runs on the same physical hardware as the first node, generating a data set specifying an identifier of said at least one second node, storing said data set as a zero-path table associated with the first node, and when determining said routing path, accessing said data set and selecting a link between said first node and said at least one second node based on said zero-path table.

The present invention introduces a routing algorithm which is based on overlay topology specifics but at the same time respects the underlying physical hardware of the P2P overlay network. The invention describes a network node (= logical peer) which includes information about the physical hardware whereon nodes of the network are running into the replication algorithm of the P2P system.

Unlike the prior art where nodes located on the same physical machine (e.g. through virtualisation of Operating Systems, e.g. XEN, VMware) are not aware of this, the present invention presents a routing system which identifies the physical hardware on which one or more of the network nodes are running and considers this information about the physical hardware for determination of a routing path.

The invention introduces zero-path links between nodes hosted on the same machine to the overlay routing layer. Therefore, the invention avoids the unnecessarily high network traffic and the message latency to the system which is caused in prior art systems by the fact that two nodes hosted on the same physical hardware (e.g., physical machine, personal computer) but in two different virtual machines with different IP addresses would exchange messages via the overlay, most likely relayed and forwarded via several external peers (IP = Internet Protocol).

In contrast to current P2P overlays where the routing algorithms are based on overlay specifics, the present invention provides a solution that considers virtualisation solutions on top of a distributed physical hardware infrastructure for the overlay topology creation and routing optimisation of a P2P network.

In the prior art, e.g., the state-of-the-art Chord topology, the finger table is constructed dependent on the IDs of the nodes in the overlay. These IDs are generated randomly and do not represent the physical network topology. As using a peer's IP address for the construction of the node ID does not work when peers are running on top of a virtualisation platform with different virtual IP addresses, messages between nodes that are hosted on the same physical machine will likely be forwarded over the network through several intermediate peers before the destination is reached. The present invention avoids this problem of the prior art by taking into consideration the physical hardware present in the P2P overlay network.

The present invention helps to decrease the load of network interfaces and networking stacks, to decrease the cluster interconnection bandwidth usage, and to increase the system speed by decreased messaging latency.

Furthermore, this invention describes an improvement for a fundamental technology that can be beneficially used in distributed environments such as server clusters or pure P2P telephony systems. In particular, this kind of technology could be included in IETF P2P-SIP (IETF = Internet Engineering Task Force; SIP = Session Initiation Protocol).

Further advantages are achieved by the embodiments of the invention indicated by the dependent claims.

According to a preferred embodiment of the invention, a lower path length is assigned to the link between said first node and said at least one second node based on said zero-path table than to a link between said first node and a node of the plurality of nodes whose identifier is not contained in said zero-path table. Preferably, said assignment is done by the first node. For the determination of said routing path from an origin node to a destination node, the routing path is selected so that the one or more links between said plurality of nodes which constitute the routing path result in a minimum total path length of the determined routing path. Preferably, said selection is performed by the first node.

According to another preferred embodiment of the invention, said zero-path table and a shortcut table of said first node are combined into a combined routing table of the first node. Preferably, said combination is performed by the first node. Said shortcut table specifies identifiers of one or more nodes of said plurality of nodes to which said first node maintains shortcut links with regard to a topology structure of the peer-to-peer overlay network. The topology structure of the peer-to-peer overlay network e.g. is a IP address space with IP addresses assigned to the nodes of the P2P overlay network. Entries in the combined routing table which correspond to entries in the zero-path table are assigned to a preference, e.g., a flag or a marking expressing a preference. Preferably, said assignment is performed by the first node. For the determination of said routing path from an origin node to a destination node, said combined routing table is accessed and a link between said first node and a node specified in said combined routing table is selected in consideration of said preference. Preferably, said access and selection is performed by the first node.

It is possible that the first node detects information about its own hardware and about hardware of other nodes of the network. The goal of this detection is to find out which nodes of the plurality of network nodes are running on a same physical hardware. A link between nodes running on the same physical hardware but with a different IP address are called "zero-path links". There are several possible ways to detect the physical hardware:

According to a preferred embodiment of the invention, said physical hardware on which the first node runs is determined by retrieving information from a platform of the first node. Preferably, said retrieval is performed by the first node. In addition to or alternatively to the determination of said physical hardware on which the first node runs, said at least one second node which runs on the same physical hardware as the first node is determined by retrieving information from a platform of the at least one second node. Preferably, said retrieval is performed by the first node. The platform may be a physical hardware on which the first node and/or the at least one second node runs, e.g., a CPU (= Central Processing Unit), a computer, a network unit, etc. The information may be e.g. a CPU ID, a MAC address, a location, an IP address, a location, etc. associated with the platform of the first node and/or the at least one second node (MAC = Media Access Control). This includes any information that a software application is able to find out with the help of the operating system(s) of the network nodes. For instance, the MAC address usually is a relative secure way to determine a physical host, however this might not be the case if hardware virtualisation technology is used.

According to another preferred embodiment of the invention, said physical hardware on which the first node runs is determined by retrieving information from an external management unit linked or associated with the first node. Preferably, said retrieval is performed by the first node. In addition to or alternatively to the determination of said physical hardware on which the first node runs, said at least one second node which runs on the same physical hardware as the first node is determined by retrieving information from an external management unit linked or associated with the second node. Preferably, said retrieval is performed by the first node. The external management unit may also be an external cluster management entity whereby the term "cluster" refers to the P2P overlay network as a cluster of network nodes.

If an external cluster management entity is available, e.g. to configure the node IDs, the an external cluster management entity might also provide information about the physical topology of the cluster. The external cluster management entity may be a central enrolment server, a bootstrap server or a network management and monitoring server.

If a software application is not able to detect the needed hardware information, a manual (pre-)configuration of the nodes by a manager of the nodes is a solution. Preferably, said physical hardware on which the first node runs is determined by retrieving corresponding information from a network operator of the peer-to-peer network and/or from a user of the first node. Preferably, said retrieval is performed by the first node. In addition to or alternatively to the determination of said physical hardware on which the first node runs, said at least one second node which runs on the same physical hardware as the first node is determined by retrieving corresponding information from a network operator of the peer-to-peer network and/or a user of the at least one second node. Preferably, said retrieval is performed by the first node.

In a preferred embodiment, said physical hardware on which the first node runs is determined by means of a measurement on an application layer associated with the first node. Preferably, said determination is performed by the first node. In addition to or alternatively to the determination of said physical hardware on which the first node runs, said at least one second node which runs on the same physical hardware as the first node is determined by means of a measurement on an application layer associated with the second node. Preferably, said determination is performed by the first node.

Said measurement on an application layer may be an application level probing mechanisms such as "ping" message exchanges. Based on said ping message exchange, nodes can estimate from the connection latency if other nodes are hosted on the same device. Also other already known methods can be used to estimate if nodes are on the same hardware: E.g. network co-ordinate systems try to gain knowledge about the underlying network by measuring some internode latency without the need of explicit measurements of all links. This allows putting nodes close together in the logical overlay when they are nearby in a physical topology. Another example is Pastry which adjusts its routing table continuously for locality by measuring the latency to other nodes.

According to another preferred embodiment of the invention, a link between said first node and said at least one second node based on said zero-path table (a so-called "zero-path link") is chosen, preferably by the routing algorithm, as the next hop from said first node.

These as well as further features and advantages of the invention will be better appreciated by reading the following detailed description of presently preferred exemplary embodiments taken in conjunction with accompanying drawings of which:
- Fig. 2: shows a P2P overlay network according to an embodiment of the invention;
- Fig. 3a: shows zero-path links in the P2P overlay network shown in Fig. 2;
- Fig. 3b: shows zero-path table associated with a node in the P2P overlay network shown in Fig. 2;
- Fig. 4a: shows links according to a combined routing table associated with a node in the P2P overlay network shown in Fig. 2; and
- Fig. 4b: shows a combined routing table according to an embodiment of the invention.

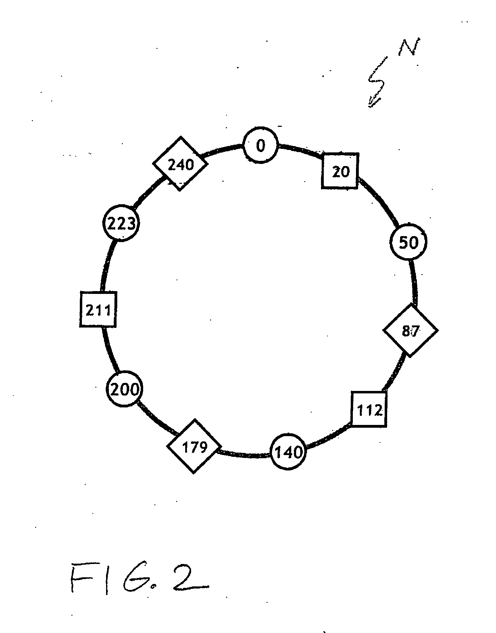

Fig. 2 shows a P2P overlay network according to an embodiment of the invention. In particular, Fig. 2 illustrates a Chord ring N according to an embodiment of the invention. The Chord ring N comprises a plurality of nodes 0, 20, 50, 87, 112, 140, 179, 200, 211, 223, 240 where the reference signs 0, 20, 50, 87, 112, 140, 179, 200, 211, 223, 240 are meant to represent also the node IDs of the nodes 0, 20, 50, 87, 112, 140, 179, 200, 211, 223, 240. The node IDs of the nodes are assigned by the overlay specific DHT algorithm and can for example be based on an enrolment server or chosen randomly by the node itself. Each node represents a peer of the Chord ring N.

In a first step of the method, a first node 20 determines on which physical hardware it is running. And, the first node 20 determines on which physical hardware the other nodes 0, 50, 87, 112, 140, 179, 200, 211, 223, 240 of the Chord ring N are running.

The first node 20 is composed of one or several inter-linked computers, i.e., a hardware platform, a software platform basing on the hardware platform and several application programs executed by the system platform formed by the software and hardware platform. The functionality of the first node 20 is provided by the execution of these application programs. The application programs or a selected part of these application programs constitute a computer software product providing a routing service as described in the following, when executed on the system platform. Further, such computer software product is constituted by a storage medium storing these application programs or said selected part of application programs.

From a functional point of view, the first node 20 comprises a control unit for control of the functions of the first node, a storage medium for storing data, and an interface for exchange of information with other nodes.

For the determination of the physical hardware, the first node 20 may use any available information that helps to identify the physical hardware it is running on. It is possible that the first node 20 retrieves information about the physical hardware it is running on by gathering information from its own platform, e.g., a CPU ID, a MAC address, a location, an IP address, etc. Then, the first node 20 may gather corresponding information from the other nodes 0, 50, 87, 112, 140, 179, 200, 211, 223, 240 of the Chord ring N and compare the gathered pieces of information. For instance, if a CPU ID of a computer on which the first node 20 is running is equal to a CPU ID of a computer on which the node 112 is running, the first node 20 arrives at the result that the physical hardware the first node 20 is running on is identical to the physical hardware the node 112 is running on.

Besides the information available from its own platform (e.g. CPU ID, MAC address, location, IP, ...), the first node 20 may use information retrieved from an external management entity, provided by means of a manual configuration performed by a user of the hardware the first node 20 is running on, gathered by means of application layer measurements, etc. Likewise, each of the other nodes 0, 50, 87, 112, 140, 179, 200, 211, 223, 240 may use any available information that helps to identify the physical hardware it is running on. It is possible that each of the other nodes 0, 50, 87, 112, 140, 179, 200, 211, 223, 240 communicates the gathered information about the respective physical hardware to the first node 20. It is also possible that the first node 20 accesses the physical hardware on which the other nodes 0, 50, 87, 112, 140, 179, 200, 211, 223, 240 are running on and collects the pieces of information about their respective physical hardware from the other nodes 0, 50, 87, 112, 140, 179, 200, 211, 223, 240.

The result of this step of classifying the physical hardware is illustrated in Fig. 2 which shows the hardware classification and illustrates this by different icon shapes for the nodes 0, 20, 50, 87, 112, 140, 179, 200, 211, 223, 240. Each shape represents another physical machine. That means that the nodes 0, 50, 140, 200, and 223 run on a first machine. The nodes 20, 112, and 211 run on a second machine. The nodes 87, 179, and 240 run on a third machine.

After the classification procedure, the node 20 maintains a zero-path link table to the second nodes 112, 211 that are hosted on the same machine. Preferably, each node 0, 20, 50, 87, 112, 140, 179, 200, 211, 223, 240 of the Chord ring N maintains a respective zero-path link table to nodes that are hosted on the same machine as the respective node.

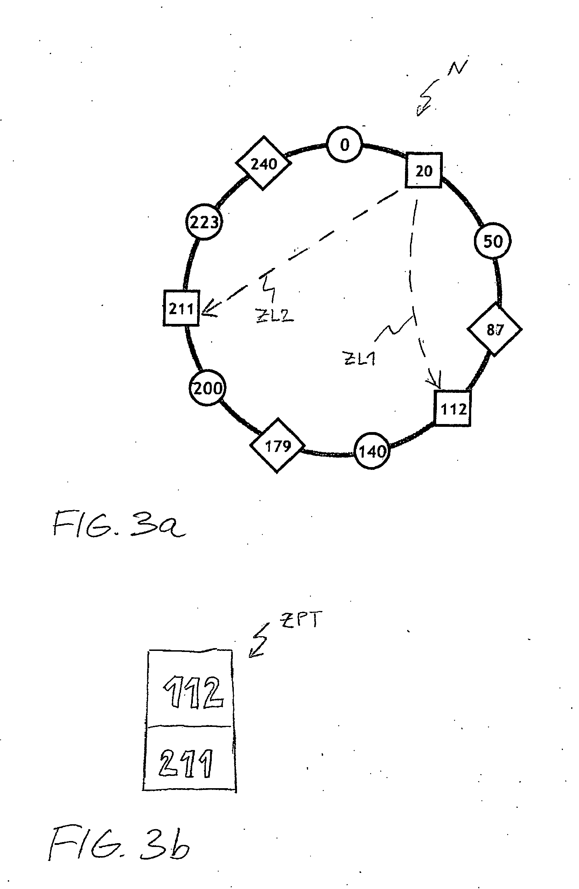

Fig. 3a shows zero-path links ZL1, ZL2 between the first node 20 and the second nodes 112, 211 which run on the same physical hardware as the first node 20. Messages that are sent via the zero-path links ZL1, ZL2 need not be sent over the network N but are exchanged via connections available in a single physical hardware. Therefore, the messages that are sent via the zero-path links ZL1, ZL2 do not burden the infrastructure of the network N and can be transmitted by minimum latency.

The identifiers, i.e., the node IDs 112, 211 of the nodes 112, 211 are maintained by the node 20 in a zero-path table ZPT shown in Fig. 3b. It is possible that the node 20 stores the zero-path table ZPT in a memory unit of the node 20, e.g., a RAM (= Random Access Memory).

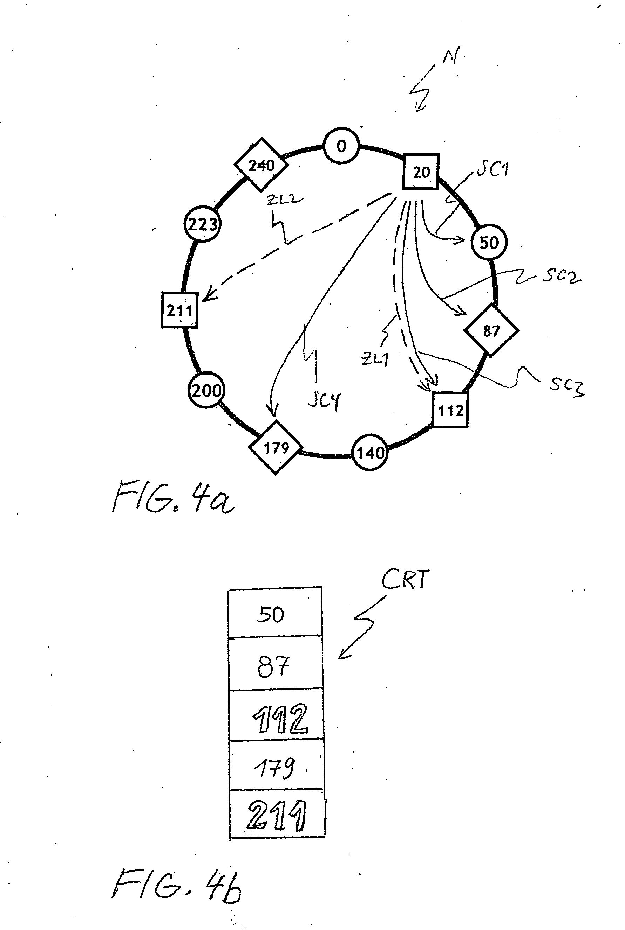

The first node 20 integrates the finger table FT and the zero-path table ZPT to a combined routing table CRT as shown in Figure 4b. By integration of the finger table FT and the zero-path table ZPT to the combined routing table CRT, the first node 20 is able to make use of the zero-path links ZL1, ZL2. The first node 20 assigns a preference to the zero-path links ZL1, ZL2. The preference can be assigned by associating with the zero-path links ZL1, ZL2 a quantity that is more advantageous than a quantity associated with the shortcut links SC1 to SC4.

For instance, the zero-path links ZL1, ZL2 are assigned a path length equal to zero, i.e., a smaller path length than to the shortcut links SC1 to SC4 which may be assigned to a path length equal to one. When determining a routing path, the first node 20 calculates the total path length of the available routing alternatives to reach a destination node from a source node. A total path length of a routing path may be calculated as the sum of the path lengths of the path sections forming together the routing path. The first node 20 then selects the routing path with a minimum total path length. As the zero-path links ZL1, ZL2 are assigned a path length equal to zero, it is probable that a routing path via one of the zero-path links ZL1, ZL2 is rather chosen than a routing path via one of the shortcut links SC1 to SC4.

It is also possible that the first node 20 assigns to the zero-path links ZL1, ZL2 a hop number of zero, i.e., a smaller hop number than to the shortcut links SC1 to SC4 to which is assigned one hop. When determining a routing path, the first node 20 calculates the hops needed in the available routing alternatives to reach a destination node from a source node. The first node 20 then selects the routing path with a minimum number of hops. As the zero-path links ZL1, ZL2 are assigned zero hops, it is probable that a routing path via one of the zero-path links ZL1, ZL2 is rather chosen than a routing path via one of the shortcut links SC1 to SC4.

Fig. 4a shows the links that are available to the first node 20 according to the combined routing table CRT. The shortcut link SC3 is identical to the zero-path link ZL1. As a zero-path link is preferred due to its advantages over standard shortcut links, this link is listed in the combined routing table CRT as the zero-path link ZL1, not as the shortcut link SC2.

DHT routing algorithms are optimised with respect to the overlay hop count. Network metrics (e.g. delay, IP hop count, ...) have no influence on the next hop that is specified by the routing algorithm. This is due to the fact that each peer only has knowledge about the links to its neighbour peers (next hop) and not about the total path of a message. Choosing the next hop with respect to network metrics would not guarantee a better performance with respect to the total path.

However there are DHT algorithms like Pastry that choose the neighbour peers with respect to network locality by periodical probing of links and updating of the routing table. Here the knowledge about zero-path links as provided by the present invention can be included as those are the optimum links to a specific ID space. Probing and updating becomes unnecessary if a zero-path link to a specific ID space is found.

In P2P algorithms where the routing algorithm does not interpret metrics like the path length or the hop count but overlay specific IDs only, the zero-path links are still useful because, if they are chosen by the routing algorithm as the next hop via the combined routing table, network traffic is decreased and message latency is improved compared to the state of the art P2P algorithms.

The join algorithm according to the present invention is modified with regard to the state-of-the-art approaches, in order to ensure consistency of the zero-path links. In the description of the join algorithm according to the present invention, it is assumed that the procedure where the peers determine on which hardware they are running on has already been completed as described above. A joining peer thus knows which peers are located on the same physical hardware. During the join process it thus establishes direct zero-path links towards the peers that are located on the same physical hardware. In addition it informs these peers that the newly established links are zero-path links and not short cut links. Thus all peers maintain an up-to-date zero-path table after the join process is finished.

## Claims

1. A method of determining a routing path in a peer-to-peer overlay network (N) comprising a plurality of nodes (0, 20, 50, 87, 112, 140, 179, 200, 211, 223, 240), the method comprising the steps of:
identifying a physical hardware on which a first node (20) of said plurality of nodes (0, 20, 50, 87, 112, 140, 179, 200, 211, 223, 240) runs;
determining at least one second node (112, 211) of said plurality of nodes (0, 20, 50, 87, 112, 140, 179, 200, 211, 223, 240) which runs on the same physical hardware as the first node (20);
generating a data set specifying an identifier of said at least one second node (112, 211);
storing said data set as a zero-path table (ZPT) associated with the first node (20); and
when determining said routing path, accessing said data set and
selecting a link (ZL1, ZL2) between said first node (20) and said at least one second node (112, 211) based on said zero-path table (ZPT).

2. The method of claim 1,
**characterised in**
**that** the method further comprises the steps of:
assigning a lower path length to the link (ZL1, ZL2) between said first node (20) and said at least one second node (112, 211) based on said zero-path table (ZPT) than to a link between said first node (20) and a node (50, 87, 179) of the plurality of nodes (0, 20, 50, 87, 112, 140, 179, 200, 211, 223, 240) whose identifier is not contained in said zero-path table (ZPT); and
determining said routing path by selecting one or more links between said plurality of nodes (0, 20, 50, 87, 112, 140, 179, 200, 211, 223, 240) which result in a minimum total path length of the determined routing path.

3. The method of claim 1,
**characterised in**
**that** the method further comprises the steps of:
combining said zero-path table (ZPT) and a shortcut table (SCT) of said first node (20) into a combined routing table (CRT) of the first node (20), said shortcut table (SCT) specifying identifiers of one or more nodes (50, 87, 112, 179) of said plurality of nodes (0, 20, 50, 87, 112, 140, 179, 200, 211, 223, 240) to which said first node (20) maintains shortcut links with regard to a topology structure of the peer-to-peer overlay network (N);
assigning a preference to entries in the combined routing table (CRT) which correspond to entries in the zero-path table (ZPT); and
when determining said routing path, accessing said combined routing table (CRT) and selecting a link between said first node (20) and a node (50, 87, 112, 179, 211) specified in said combined routing table (CRT) in consideration of said preference.

4. The method of claim 1,
**characterised in**
**that** the method further comprises the step of:
identifying said physical hardware on which the first node (20) runs and/or determining said at least one second node (112, 211) by retrieving information from a platform of the first node (20) and/or said at least one second node (112, 211), respectively.

5. The method of claim 4,
**characterised in**
**that** said information retrieved from a platform of the first node (20) and/or said at least one second node (112, 211), respectively, comprises at least one of the following data associated with the physical hardware on which the first node (20) and/or said at least one second node (112, 211), respectively, runs: an identifier of a central processing unit, a MAC address, an IP address, a location.

6. The method of claim 1,
**characterised in**
**that** the method further comprises the step of:
identifying said physical hardware on which the first node (20) runs and/or determining said at least one second node (112, 211) by retrieving information from an external management unit linked with the first node (20) and/or said at least one second node (112, 211), respectively.

7. The method of claim 1,
**characterised in**
**that** the method further comprises the step of:
identifying said physical hardware on which the first node (20) runs and/or determining said at least one second node (112, 211) by means of retrieving corresponding information from a network operator of the peer-to-peer network (N) and/or a user of the first node (20) and/or a user of the at least one second node (112, 211), respectively.

8. The method of claim 1,
**characterised in**
**that** the method further comprises the step of:
identifying said physical hardware on which the first node (20) runs and/or determining said at least one second node (112, 211) by means of a measurement on an application layer of the peer-to-peer overlay network (N).

9. A first node (20) of a peer-to-peer overlay network (N) comprising a plurality of nodes (0, 20, 50, 87, 112, 140, 179, 200, 211, 223, 240), whereby the first node (20) comprises a control unit adapted to identify a physical hardware on which the first node (20) runs, determine at least one second node (112, 211) of said plurality of nodes (0, 20, 50, 87, 112, 140, 179, 200, 211, 223, 240) which runs on the same physical hardware as the first node (20), generate a data set specifying an identifier of said at least one second node (112, 211), initiate the storage of said data set as a zero-path table (ZPT) associated with the first node (20), and when determining said routing path, access said data set and select a link between said first node (20) and said at least one second node (112, 211) based on said zero-path table (ZPT).

10. A computer program product for determining a routing path in a peer-to-peer network (N) comprising a plurality of nodes (0, 20, 50, 87, 112, 140, 179, 200, 211, 223, 240), whereby the computer program product, when executed by a node of said plurality of nodes (0, 20, 50, 87, 112, 140, 179, 200, 211, 223, 240), performs the steps of:
identifying a physical hardware on which a first node (20) of said plurality of nodes (0, 20, 50, 87, 112, 140, 179, 200, 211, 223, 240) runs;
determining at least one second node (112, 211) of said plurality of nodes (0, 20, 50, 87, 112, 140, 179, 200, 211, 223, 240) which runs on the same physical hardware as the first node (20);
generating a data set specifying an identifier of said at least one second node (112, 211);
storing said data set as a zero-path table (ZPT) associated with the first node (20); and
when determining said routing path, accessing said data set and
selecting a link between said first node (20) and said at least one second node (112, 211) based on said zero-path table (ZPT).

## Amended claims

### Amended claims in accordance with Rule 137(2) EPC.

**7.** of retrieving corresponding information from a network operator of the peer-to-peer network (N) and/or a user of the first node (20) and/or a user of the at least one second node (112, 211), respectively.

**8.** The method of claim 1,
**characterised in**
**that** the method further comprises the step of:
identifying said physical hardware on which the first node (20) runs and/or determining said at least one second node (112, 211) by means of a latency measurement on an application layer of the peer-to-peer overlay network (N).

**9.** A first node (20) of a peer-to-peer overlay network (N) comprising a plurality of nodes (0, 20, 50, 87, 112, 140, 179, 200, 211, 223, 240), whereby the first node (20) comprises a control unit adapted to identify a physical hardware on which the first node (20) runs, determine at least one second node (112, 211) of said plurality of nodes (0, 20, 50, 87, 112, 140, 179, 200, 211, 223, 240) which runs on the same physical hardware as the first node (20), generate a data set specifying an identifier of said at least one second node (112, 211), initiate the storage of said data set as a zero-path table (ZPT) associated with the first node (20), and when determining said routing path, access said data set and select a link between said first node (20) and said at least one second node (112, 211) based on said zero-path table (ZPT).

**10.** A computer program product for determining a routing path in a peer-to-peer network (N) comprising a plurality of nodes (0, 20, 50, 87, 112, 140, 179, 200, 211, 223, 240), whereby the computer program product,
